# EUROPÄISCHE PATENTANMELDUNG

(11) **EP 3 109 112 A1**
(43) Veröffentlichungstag der Anmeldung: **28.12.2016**
(21) Anmeldenummer: 16001376.9
(22) Anmeldetag: 20.06.2016
(51) Int. Cl.: B60W 20/16, B60W 20/00

(54) **VERFAHREN ZUM BETREIBEN EINES FAHRZEUGS, INSBESONDERE EINES NUTZFAHRZEUGS**

(30) Priorität: 25.06.2015 DE 102015008289
(71) Anmelder: MAN Truck & Bus AG, 80995 München (DE)
(72) Erfinder: Freiherr von Esebeck, Götz, 15831 Mahlow (DE); Megerle, Thomas, 80992 München (DE); Müller, Anton, 82327 Tutzing (DE); Froschermeler, Andreas, 80992 München (DE); Mörtl, Alexander, 82110 Germering (DE)
(74) Vertreter: Liebl, Thomas

(57) **Zusammenfassung**

Die Erfindung betrifft ein Verfahren zum Betreiben eines Fahrzeugs, insbesondere eines Nutzfahrzeugs, wobei das Fahrzeug eine Brennkraftmaschine (3) und einen mit der Brennkraftmaschine (3) gekoppelten Abgasstrang (23) aufweist, wobei eine Temperatur-Erfassungseinrichtung (29) vorgesehen ist, mittels der die Temperatur des Abgasstrangs (23) und/oder des durch den Abgasstrang (23) strömenden Abgases (25) erfassbar ist, wobei wenigstens eine mittels der Brennkraftmaschine (3) antreibbare elektrische Maschine (17) vorgesehen ist, mittels der elektrische Energie erzeugbar ist, und wobei die angetriebene elektrische Maschine (17) die Brennkraftmaschine (3) mit einer Bremsleistung beaufschlagt. Erfindungsgemäß ist eine Regel- und/oder Steuereinrichtung (31) vorgesehen, mittels der, insbesondere zur Erhöhung der Temperatur des Abgasstrangs (23), die elektrischen Maschine (17) und die Brennkraftmaschine (3) bei wenigstens einer definierten Betriebssituation des Fahrzeugs (1) selbsttätig geregelt und/oder gesteuert werden, dergestalt, dass, sofern die wenigstens eine erfasste Temperatur wenigstens einen definierten Temperatur-Grenzwert (Tgrenz) unterschreitet, die Bremsleistung der elektrischen Maschine um einen definierten Leistungswert (Pdef.) erhöht wird, und dass bei einer Erhöhung der Bremsleistung um den definierten Leistungswert (Pdef.) die Antriebsleistung der Brennkraftmaschine (3) ebenfalls um den definierten Leistungswert (Pdef.) erhöht wird.

## Beschreibung

Die Erfindung betrifft ein Verfahren zum Betreiben eines Fahrzeugs, insbesondere eines Nutzfahrzeugs, nach dem Oberbegriff des Patentanspruches 1 sowie ein Fahrzeug, insbesondere ein Nutzfahrzeug, nach dem Oberbegriff des Patentanspruches 15.

Es ist bekannt, an einem Fahrzeug einen Hybridantrieb vorzusehen, bei dem das Fahrzeug sowohl mittels einer Brennkraftmaschine als auch mittels einer elektrischen Maschine angetrieben werden kann. Der Hybridantrieb kann dabei beispielsweise als serieller Hybridantrieb ausgebildet sein, bei dem lediglich die elektrische Maschine mit einer Antriebswelle des Fahrzeugs gekoppelt ist. Ebenso kann der Hybridantrieb beispielsweise aber auch durch einen parallelen Hybridantrieb gebildet sein, bei dem sowohl die Brennkraftmaschine als auch die elektrische Maschine mit einer Antriebswelle des Fahrzeugs gekoppelt werden können. Des Weiteren sind auch leistungsverzweigte Hybride bzw. Mischhybride bekannt, bei denen der Hybridantrieb in Abhängigkeit von der Betriebssituation des Fahrzeugs seriell und parallel betrieben werden kann.

Weiter werden die Abgase einer Brennkraftmaschine üblicherweise mittels eines Abgasnachbehandlungssystems gereinigt. Hierzu wird das von der Brennkraftmaschine emittierte Abgas in einen mit der Brennkraftmaschine gekoppelten Abgasstrang des Abgasnachbehandlungssystems geleitet. Der Abgasstrang weist üblicherweise mehrere Abgasnachbehandlungselemente auf, mittels denen das durch den Abgasstrang strömende Abgas gereinigt wird. Ein derartiges Abgasnachbehandlungselement kann beispielsweise durch einen Oxidationskatalysator oder durch einen SCR-Katalysator (SCR: selective catalytic reduction) gebildet sein. Das Abgas wird dabei besonders effektiv mittels der Abgasnachbehandlungselemente gereinigt, wenn die Abgasnachbehandlungselemente ihre jeweilige Betriebstemperatur erreichen. Sind die Abgasnachbehandlungselemente zu kalt bzw. nicht ausreichend aufgeheizt, ist ihre Effektivität bzw. ihre Konvertierungsrate deutlich reduziert.

Aufgabe der Erfindung ist es daher, ein Verfahren zum Betreiben eines Fahrzeugs, insbesondere eines Nutzfahrzeugs, und ein Fahrzeug, insbesondere ein Nutzfahrzeug, bereitzustellen, mittels denen die Effektivität der Abgasreinigung auf einfache Weise erhöht wird.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zum Betreiben eines Fahrzeugs, insbesondere eines Nutzfahrzeugs, vorgeschlagen, wobei das Fahrzeug eine Brennkraftmaschine und einen mit der Brennkraftmaschine gekoppelten Abgasstrang aufweist, wobei eine Temperatur-Erfassungseinrichtung vorgesehen ist, mittels der die Temperatur des Abgasstrangs und/oder des durch den Abgasstrang strömenden Abgases erfasst werden kann, wobei wenigstens eine mittels der Brennkraftmaschine antreibbare elektrische Maschine vorgesehen ist, mittels der elektrische Energie erzeugt werden kann, und wobei die angetriebene elektrische Maschine die Brennkraftmaschine mit einer Bremsleistung beaufschlagt. Erfindungsgemäß ist eine Regel- und/oder Steuereinrichtung vorgesehen, mittels der, insbesondere zur Erhöhung der Temperatur des Abgasstrangs, die elektrische Maschine und die Brennkraftmaschine bei wenigstens einer definierten Betriebssituation des Fahrzeugs selbsttätig bzw. automatisch geregelt und/oder gesteuert werden, dergestalt, dass, sofern die wenigstens eine erfasste Temperatur wenigstens einen definierten Temperatur-Grenzwert überschreitet, die Bremsleistung der elektrischen Maschine um einen definierten Leistungswert erhöht wird. Zudem wird bei einer Erhöhung der Bremsleistung um den definierten Leistungswert die Antriebsleistung der Brennkraftmaschine ebenfalls um den definierten Leistungswert erhöht.

Auf diese Weise wird die Effektivität der Abgasreinigung deutlich erhöht, da nun bei Unterschreiten des definierten Temperatur-Grenzwerts die Bremsleistung der elektrischen Maschine und die Antriebsleistung der Brennkraftmaschine selbsttätig erhöht werden. Durch die Erhöhung der Antriebsleistung der Brennkraftmaschine wird die von der Brennkraftmaschine abgegebene Wärmeenergiemenge und somit auch die Temperatur des Abgasstrangs erhöht. Dadurch kann beispielsweise ein Auskühlen des Abgasstrangs verhindert oder verlangsamt werden. Ebenso wäre es beispielsweise denkbar, bei einem Kaltstart des Fahrzeugs die Erwärmung des Abgasstrangs mittels der erfindungsgemäßen Verfahrensführung zu beschleunigen. Des Weiteren wird durch die erfindungsgemäße Verfahrensführung die Effektivität der Abgasreinigung auch auf besonders einfache Weise erhöht, da das erfindungsgemäße Verfahren mit den bereits vorhandenen Antriebskomponenten (Brennkraftmaschine und elektrische Maschine) des Fahrzeugs durchgeführt werden kann.

Bevorzugt ist die elektrische Maschine dabei durch eine Drehstrom-Synchronmaschine gebildet, um die elektrische Maschine besonders energieeffizient auszubilden.

In einer bevorzugten Verfahrensführung kann die Brennkraftmaschine mit wenigstens einer Antriebswelle des Fahrzeugs gekoppelt werden. In einer Koppel-Betriebssituation des Fahrzeugs, in der die Brennkraftmaschine eingeschaltet und mit der Antriebswelle gekoppelt ist, wird die Antriebsleistung der Brennkraftmaschine dann vorzugsweise derart erhöht, dass durch die Erhöhung der Antriebsleistung die Fahrzeuggeschwindigkeit nicht verändert wird. Dadurch wird zuverlässig sichergestellt, dass sich das Fahrzeug bei der Erhöhung der Antriebsleistung der Brennkraftmaschine weiterhin mit der vom Fahrer gewünschten Geschwindigkeit fortbewegt.

Besonders bevorzugt wird in der Koppel-Betriebssituation zur Erhöhung der Antriebsleistung der Brennkraftmaschine nur das Antriebsdrehmoment der Brennkraftmaschine verändert bzw. erhöht, um den Komfort für den Fahrer des Fahrzeugs zu erhöhen.

Weiter bevorzugt kann die Brennkraftmaschine von der wenigstens einen Antriebswelle des Fahrzeugs abgekoppelt werden. In einer Abkoppel-Betriebssituation des Fahrzeugs, in der die Brennkraftmaschine eingeschaltet und von der wenigstens einen Antriebswelle abgekoppelt ist, wird dann bevorzugt zur Erhöhung der Antriebsleistung der Brennkraftmaschine das Antriebsdrehmoment und/oder die Drehzahl der Brennkraftmaschine verändert. Durch die Veränderung des Antriebsdrehmoments und/oder der Drehzahl kann die Antriebsleistung der Brennkraftmaschine auf besonders flexible Weise erhöht werden.

Bevorzugt weist das Fahrzeug ein Start-Stopp-System auf. In einer Stopp-Betriebssituation des Fahrzeugs, in der die Brennkraftmaschine von der wenigstens einen Antriebswelle abgekoppelt und mittels des Start-Stopp-Systems ausgeschaltet ist, wird dann bevorzugt die Brennkraftmaschine selbsttätig bzw. automatisch mittels der Regel- und/oder Steuereinrichtung eingeschaltet, wenn die wenigstens eine erfasste Temperatur den wenigstens einen Temperatur-Grenzwert unterschreitet. Auf diese Weise wird ein zu starkes Abkühlen des Abgasstrangs in der Stopp-Betriebssituation des Fahrzeugs zuverlässig verhindert.

In einer bevorzugten konkreten Ausführungsform kann zwischen die Brennkraftmaschine und der wenigstens einen Antriebswelle ein Fahrzeuggetriebe geschaltet sein, wobei zwischen die Brennkraftmaschine und dem Fahrzeuggetriebe eine Fahrzeugkupplung geschaltet ist, wobei das Fahrzeuggetriebe mittels einer Verbindungswelle mit der Fahrzeugkupplung verbunden ist, und wobei die elektrische Maschine leistungsübertragend mit der Verbindungswelle verbunden ist. Auf diese Weise wird ein paralleler Hybridantrieb realisiert, mittels dem das erfindungsgemäße Verfahren durchgeführt werden kann.

Alternativ kann die Brennkraftmaschine auch mit keiner Antriebswelle des Fahrzeugs gekoppelt werden. In einer Betriebssituation des Fahrzeugs, in der die Brennkraftmaschine eingeschaltet ist, wird dann vorzugsweise zur Erhöhung der Antriebsleistung der Brennkraftmaschine das Antriebsdrehmoment und/oder die Drehzahl der Brennkraftmaschine erhöht. Dadurch kann die Antriebsleistung der Brennkraftmaschine auf besonders flexible Weise erhöht werden.

In einer bevorzugten konkreten Ausgestaltung kann die mittels der elektrischen Maschine erzeugte elektrische Energie mittels einer Zuführeinrichtung einer weiteren elektrischen Maschine zugeführt werden, mittels der die wenigstens eine Antriebswelle des Fahrzeugs angetrieben werden kann. Dadurch wird auf besonders einfache Weise ein serieller Hybridantrieb realisiert, bei dem das erfindungsgemäße Verfahren angewendet werden kann. Bevorzugt ist dabei vorgesehen, dass die mittels der elektrischen Maschine erzeugte elektrische Energie in einem elektrischen Energiespeicher zwischenspeicherbar und ausgehend von dem Energiespeicher der weiteren elektrischen Maschine zugeführt werden kann. Auf diese Weise ist der serielle Hybridantrieb besonders flexibel.

Vorzugsweise wird zur Erhöhung der Bremsleistung der elektrischen Maschine die mittels der elektrischen Maschine erzeugte elektrische Leistung erhöht. So kann die Bremsleistung der elektrischen Maschine besonders einfach erhöht werden.

Bevorzugt kann die elektrische Leistung der elektrischen Maschine wenigstens einem elektrischen Energieaufnehmer zugeführt werden, wobei zur Erhöhung der mittels der elektrischen Maschine erzeugten elektrischen Leistung die dem elektrischen Energieaufnehmer zugeführte elektrische Leistung der elektrischen Maschine erhöht wird. So kann die mittels der elektrischen Maschine erzeugte elektrische Leistung auf einfache Weise erhöht werden. Bevorzugt ist dabei vorgesehen, dass der wenigstens eine elektrische Energieaufnehmer durch einen elektrischen Energiespeicher und/oder durch einen elektrischen Energieverbraucher gebildet ist.

Besonders bevorzugt ist der elektrische Energieverbraucher durch eine elektrisch betreibbare Heizeinrichtung gebildet, mittels der der Abgasstrang aufgeheizt werden kann. So kann der Abgasstrang besonders effektiv aufgeheizt werden.

Vorzugsweise wird, sofern die erfasste Temperatur den definierten Temperatur-Grenzwert unterschreitet, vor der Erhöhung der Bremsleistung mittels der Regel- und/oder Steuereinrichtung überprüft, ob die Bremsleistung der elektrischen Maschine um den definierten Leistungswert erhöht werden kann. Alternativ und/oder zusätzlich kann, sofern die erfasste Temperatur den definierten Temperatur-Grenzwert unterschreitet, vor der Erhöhung der Bremsleistung auch mittels der Regel- und/oder Steuereinrichtung überprüft werden, ob die Antriebsleistung der Brennkraftmaschine um den definierten Leistungswert erhöht werden kann.

Weiter bevorzugt weist der Abgasstrang wenigstens ein Abgasnachbehandlungselement auf. Bevorzugt ist dabei vorgesehen, dass das wenigstens eine Abgasnachbehandlungselement durch einen Partikelfilter und/oder durch einen Oxidationskatalysator und/oder durch einen SCR-Katalysator und/oder durch einen DeNOₓ-Katalysator gebildet ist.

Besonders bevorzugt kann mittels der Temperatur-Erfassungseinrichtung die Temperatur des Abgasstrangs und/oder des durch den Abgasstrang strömenden Abgases in einem definierten Nahbereich im Bereich wenigstens eines Abgasnachbehandlungselements erfasst werden. So kann auf besonders zuverlässig ermittelt werden, ob das Abgas wie gewünscht mittels des Abgasnachbehandlungselements gereinigt wird oder nicht.

Zur Lösung der bereits genannten Aufgabe wird ferner ein Fahrzeug, insbesondere ein Nutzfahrzeug, vorgeschlagen, wobei das Fahrzeug eine Brennkraftmaschine und einen mit der Brennkraftmaschine gekoppelten Abgasstrang aufweist, wobei eine Temperatur-Erfassungseinrichtung vorgesehen ist, mittels der die Temperatur des Abgasstrangs und/oder des durch Abgasstrang strömenden Abgases erfasst werden kann, wobei wenigstens eine mittels der Brennkraftmaschine antreibbare elektrische Maschine vorgesehen ist, mittels der elektrische Energie erzeugt werden kann, und wobei die angetriebene elektrische Maschine die Brennkraftmaschine mit einer Bremsleistung beaufschlagt. Erfindungsgemäß ist eine Regel- und/oder Steuereinrichtung vorgesehen, mittels der, insbesondere zur Erhöhung der Temperatur des Abgasstrangs, die elektrische Maschine und die Brennkraftmaschine bei wenigstens einer definierten Betriebssituation des Fahrzeugs selbsttätig bzw. automatisch geregelt und/oder gesteuert werden können, dergestalt, dass, sofern die wenigstens eine erfasste Temperatur wenigstens einen definierten Temperatur-Grenzwert unterschreitet, die Bremsleistung der elektrischen Maschine um einen definierten Leistungswert erhöht wird. Zudem wird bei einer Erhöhung der Bremsleistung um den definierten Leistungswert die Antriebsleistung der Brennkraftmaschine ebenfalls um den definierten Leistungswert erhöht.

Die sich durch das erfindungsgemäße Fahrzeug ergebenden Vorteile sind identisch mit den bereits gewürdigten Vorteilen der erfindungsgemäßen Verfahrensführung, so dass diese an dieser Stelle nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung den Aufbau einer ersten Ausführungsform eines erfindungsgemäßen Fahrzeugs;
- Fig. 2: ein Diagramm, anhand dem die erfindungsgemäße Verfahrensführung erläutert wird;
- Fig. 3: in einer Darstellung gemäß Fig. 1 eine zweite Ausführungsform eines erfindungsgemäßen Fahrzeugs; und
- Fig. 4: ein Diagramm, anhand dem die erfindungsgemäße Verfahrensführung erläutert wird.

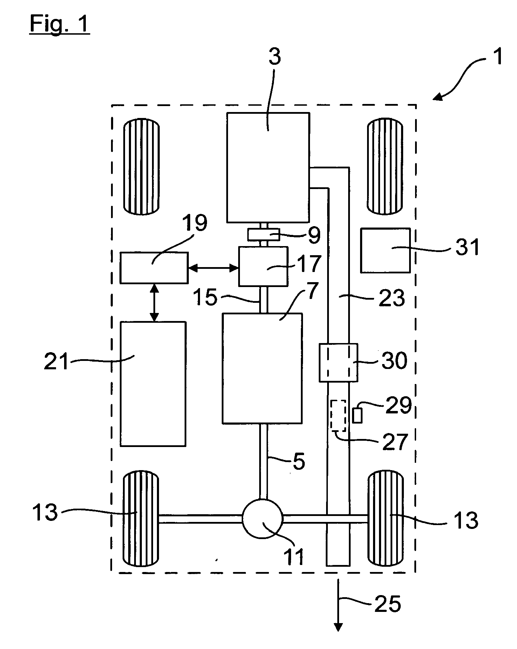

In Fig. 1 ist schematisch der Aufbau einer ersten Ausführungsform eines erfindungsgemäßen Fahrzeugs 1 gezeigt. Das Fahrzeug 1 weist hier beispielhaft einen parallelen Hybridantrieb auf. Der parallele Hybridantrieb umfasst eine Brennkraftmaschine 3, die hier beispielhaft mit einer Antriebswelle 5 des Fahrzeugs 1 gekoppelt werden kann. Zwischen der Brennkraftmaschine 3 und der Antriebswelle 5 ist hier beispielhaft ein Fahrzeuggetriebe 7 geschaltet. Zudem ist hier beispielhaft auch zwischen der Brennkraftmaschine 3 und dem Fahrzeuggetriebe 7 eine Fahrzeugkupplung 9 geschaltet. Mittels des Fahrzeuggetriebes 7 und der Fahrzeugkupplung 9 kann die Brennkraftmaschine 3 mit der Antriebswelle 5 gekoppelt und von der Antriebswelle 5 abgekoppelt werden. Des Weiteren ist die Antriebswelle 5 hier beispielhaft ausgangsseitig mit einem Differenzial 11 des Fahrzeugs 1 verbunden. Mittels des Differenzials 11 wird die mittels der Antriebswelle 5 übertragene Antriebsleistung auf die hier beispielhaft hinteren Fahrzeugräder 13 des Fahrzeugs 1 übertragen.

Wie in Fig. 1 weiter gezeigt ist, sind die Fahrzeugkupplung 9 und das Fahrzeuggetriebe 7 hier beispielshaft mittels einer Verbindungswelle 15 verbunden. Die Verbindungswelle 15 ist hier beispielhaft leistungsübertragend mit einer elektrischen Maschine 17 des parallelen Hybridantriebs verbunden. Die elektrische Maschine ist hier beispielhaft durch eine Drehstrom-Synchronmaschine gebildet und kann hier sowohl als elektrischer Generator als auch als elektrischer Motor betrieben werden. Weiter ist die elektrische Maschine 17 hier beispielhaft auch leistungsübertragend bzw. energieübertragend mit einer Leistungselektronik bzw. mit einer Energieumwandlungseinrichtung 19 verbunden. Mittels der Energieumwandlungseinrichtung 19 kann Drehstrom in Gleichstrom und umgekehrt Gleichstrom in Drehstrom umgewandelt werden. Gemäß Fig. 1 ist die Energieumwandlungseinrichtung 19 hier weiter auch leistungsübertragend bzw. energieübertragend mit einem Energiespeicher 21 verbunden. Mittels des Energiespeichers 21 kann elektrische Energie in Form von Gleichstrom gespeichert werden. Der Energiespeicher 21 kann dabei beispielsweise als Lithium-Ionen-Batterie ausgebildet sein.

Im Generatorbetrieb der elektrischen Maschine 17 wird die elektrische Maschine 17 hier über die Verbindungswelle 15 mittels der Brennkraftmaschine 3 angetrieben. Mittels der elektrischen Maschine 17 wird dann elektrische Energie in Form von Drehstrom erzeugt. Der erzeugte Drehstrom wird dann der Energieumwandlungseinrichtung 19 zugeführt und mittels der Energieumwandlungseinrichtung 19 in Gleichstrom umgewandelt. Die in Gleichstrom umgewandelte elektrische Energie wird schließlich dem Energiespeicher 21 zugeführt und in dem Energiespeicher 21 gespeichert. Des Weiteren beaufschlagt die elektrischen Maschine 17 die Brennkraftmaschine 3 in dem Generatorbetrieb mit einer Bremsleistung.

Im Motorbetrieb der elektrischen Maschine 17 wird die im Energiespeicher gespeicherte elektrische Energie in Form von Gleichstrom der Energieumwandlungseinrichtung 19 zugeführt. Mittels der Energieumwandlungseinrichtung 19 wird der zugeführte Gleichstrom dann in Drehstrom umgewandelt. Die in Drehstrom umgewandelte Energie wird dann der elektrischen Maschine 17 zugeführt, so dass die Verbindungswelle 15 mittels der elektrischen Maschine 17 angetrieben wird.

Die Antriebswelle 5 des Fahrzeugs 1 kann hier somit allein mittels der Brennkraftmaschine 3, allein mittels der elektrischen Maschine 17 oder gleichzeitig mit der Brennkraftmaschine 3 und der elektrischen Maschine 17 angetrieben werden.

Wie in Fig. 1 weiter gezeigt ist, ist die Brennkraftmaschine 3 auch mit einem Abgasstrang 23 des Fahrzeugs 1 gekoppelt. Mittels des Abgasstrangs 23 wird ein von der Brennkraftmaschine 3 emittiertes Abgas 25 in die Fahrzeug-Umgebung geleitet. Der Abgasstrang 23 weist hier beispielhaft ein mit gestrichelten Linien angedeutetes Abgasnachbehandlungselement 27 auf, mittels dem das durch den Abgasstrang strömende Abgas gereinigt wird. Zudem weist der Abgasstrang 23 hier auch einen in einem definierten Nahbereich im Bereich des Abgasnachbehandlungselements 27 angeordneten Temperatursensor 29 auf, mittels dem die Temperatur des Abgasstrangs 23 gemessen wird. Weiter weist der Abgasstrang 23 hier auch eine, in Abgas-Strömungsrichtung gesehen, stromauf des Abgasnachbehandlungselements 27 angeordnete, elektrisch betreibbare Heizeinrichtung 30 auf, mittels der der Abgasstrang 23 aufgeheizt werden kann.

Des Weiteren sind der Temperatursensor 29 und die Heizeinrichtung 30 hier signaltechnisch mit einer Regel- und/oder Steuereinrichtung 31 des Fahrzeugs 1 verbunden. Mittels der Regel- und/oder Steuereinrichtung 31 werden die elektrische Maschine 17 und die Brennkraftmaschine 3 bei definierten Betriebssituationen des Fahrzeugs 1 selbsttätig bzw. automatisch geregelt und/oder gesteuert, dergestalt, dass , sofern die mittels des Temperatursensors 29 gemessene Temperatur wenigstens einen definierten Temperatur-Grenzwert unterschreitet, die im Generatorbetrieb auf die Brennkraftmaschine 3 ausgeübte Bremsleistung der elektrischen Maschine 17 um einen definierten Leistungswert erhöht wird. Bei einer Erhöhung der Bremsleistung um den definierten Leistungswert wird die Antriebsleistung der Brennkraftmaschine 3 dann ebenfalls um den definierten Leistungswert erhöht.

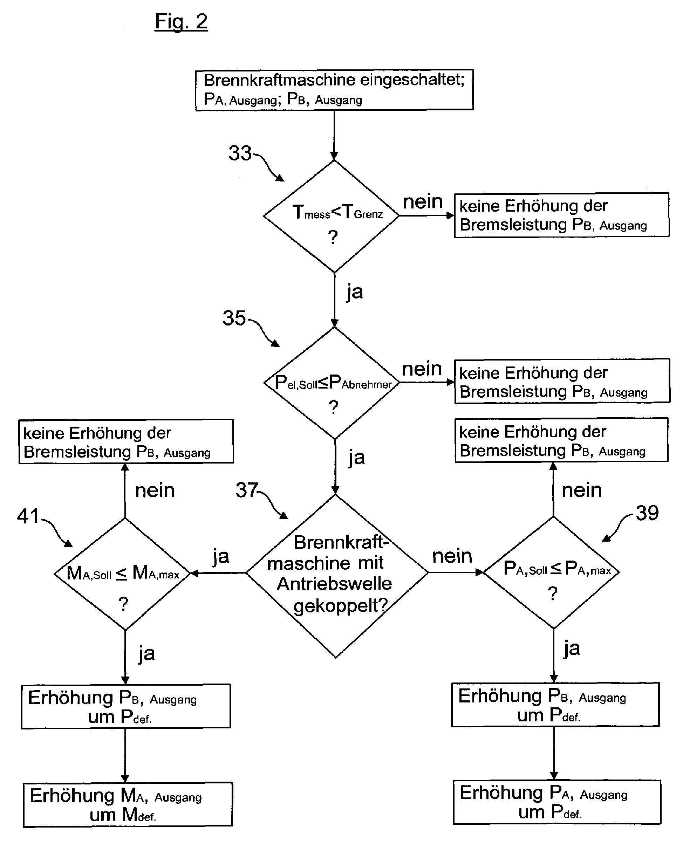

Eine beispielhafte konkrete Regelung bzw. Steuerung der elektrischen Maschine 17 mittels der Regel- und/oder Steuereinrichtung 31 und der Brennkraftmaschine 3 wird nachfolgend anhand von Fig. 2 näher erläutert:

In einer Ausgangssituation ist die Brennkraftmaschine 3 des Fahrzeugs 1 eingeschaltet. Die Bremsleistung der elektrischen Maschine 17 P_{B} weist hier den Bremsleistungs-Ausgangswert P_{B}, Ausgang auf, während die Antriebsleistung der Brennkraftmaschine P_{A} den Antriebsleistungs-Ausgangswert P_{A}, Ausgang aufweist. In einem ersten Überprüfungsschritt 33 wird mittels der Regel- und/oder Steuereinrichtung 31 zunächst geprüft, ob die mittels des Temperatursensors 29 gemessene Temperatur Tₘₑₛₛ einen definierten Temperatur-Grenzwert T_{grenz} unterschreitet. Sofern die mittels des Temperatursensors 29 gemessene Temperatur Tₘₑₛₛ den Temperatur-Grenzwert T_{grenz} nicht unterschreitet, wird der Bremsleistungs-Ausgangswert P_{B}, Ausgang der elektrischen Maschine 17 nicht erhöht. Sofern die mittels des Temperatursensors 29 gemessene Temperatur Tₘₑₛₛ den Temperatur-Grenzwert T_{grenz} unterschreitet, wird mittels der Regel- und/oder Steuereinrichtung 31 ein zweiter Überprüfungsschritt 35 durchgeführt.

In dem zweiten Überprüfungsschritt 35 wird überprüft, ob die elektrische Sollleistung der elektrischen Maschine 17 P_{elektrisch, soll} eine Abnehmerleistung P_{Abnehmer} überschreitet. Die elektrische Sollleistung P_{elektrisch, soll} ist dabei diejenige elektrische Leistung, die von der elektrischen Maschine 17 erzeugt wird, wenn die Bremsleistung P_{B} der elektrischen Maschine 17 um den definierten Leistungswert P_{def.} erhöht wird. Die Abnehmerleistung P_{Abnehmer} ist die maximale elektrische Leistung, die dem elektrischen Energiespeicher 21 und der Heizeinrichtung 30 aktuell zugeführt werden kann. Sofern die elektrische Sollleistung P_{elektrisch, soll} die Abnehmerleistung P_{Abnehmer} überschreitet, wird der Bremsleistungs-Ausgangswert P_{B}, Ausgang der elektrischen Maschine 17 nicht durch die Regel- und/oder Steuereinrichtung 31 erhöht. Sofern die elektrische Sollleistung P_{elektrisch, soll} die Abnehmerleistung P_{Abnehmer} nicht überschreitet, wird mittels der Regel- und/oder Steuereinrichtung 31 ein dritter Überprüfungsschritt 37 durchgeführt.

In diesem dritten Überprüfungsschritt 37 wird mittels der Regel- und/oder Steuereinrichtung 31 geprüft, ob die Brennkraftmaschine 3 mit der Antriebswelle 5 gekoppelt ist. Sofern die Brennkraftmaschine 3 nicht mit der Antriebswelle 5 gekoppelt ist, wird mittels der Regel- und/oder Steuereinrichtung 31 ein Überprüfungsschritt 39 durchgeführt.

In dem Überprüfungsschritt 39 wird mittels der Regel- und/oder Steuereinrichtung 31 überprüft, ob eine Soll-Antriebsleistung der Brennkraftmaschine 3 P_{A}, ₛₒₗₗ eine maximale Antriebsleistung der Brennkraftmaschine 3 P_{A}, ₘₐₓ überschreitet. Bei der Soll-Antriebsleistung P_{A,soll} handelt es sich um die um den definierten Leistungswert P_{def.} erhöhte Antriebsleistung der Brennkraftmaschine 3. Sofern die Soll-Antriebsleistung P_{A,soll} der Brennkraftmaschine 3 die maximale Antriebsleistung P_{A}, ₘₐₓ der Brennkraftmaschine 3 überschreitet, wird mittels der Regel- und/oder Steuereinrichtung 31 der Bremsleistungs-Ausgangswert P_{B}, Ausgang der elektrischen Maschine 17 nicht erhöht. Sofern die Soll-Antriebsleistung P_{A,soll} die maximale Antriebsleistung P_{A,max} der Brennkraftmaschine 3 nicht überschreitet, wird der Bremsleistungs-Ausgangswert P_{B}, Ausgang um den definierten Leistungswert P_{def.} mittels der Regel- und/oder Steuereinrichtung 31 erhöht. Der Antriebsleistungs-Ausgangswert P_{A}, Ausgang der Brennkraftmaschine 3 wird dann ebenfalls um den definierten Leistungswert P_{def.} erhöht.

Sofern in dem dritten Überprüfungsschritt 37 festgestellt wird, dass die Brennkraftmaschine 3 mit der Antriebswelle 5 gekoppelt ist, wird mittels der Regel- und/oder Steuereinrichtung 31 ein Überprüfungsschritt 41 durchgeführt.

In dem Überprüfungsschritt 41 wird mittels der Regel- und/oder Steuereinrichtung 31 überprüft, ob ein Soll-Antriebsmoment der Brennkraftmaschine 3 M_{A}, ₛₒₗₗ ein maximales Antriebsmoment der Brennkraftmaschine 3 M_{A}, ₘₐₓ bei der aktuellen Drehzahl der Brennkraftmaschine 3 überschreitet. Bei dem Soll-Antriebsmoment M_{A}, ₛₒₗₗ handelt es sich um das um einen definierten Momentwert M_{def.} erhöhte Antriebsmoment der Brennkraftmaschine 3. Sofern das Soll-Antriebsmoment M_{A,soll} der Brennkraftmaschine 3 das maximale Antriebsmoment M_{A}, ₘₐₓ der Brennkraftmaschine 3 bei der aktuellen Drehzahl der Brennkraftmaschine 3 überschreitet, wird mittels der Regel- und/oder Steuereinrichtung 31 der Bremsleistungs-Ausgangswert P_{B}, Ausgang der elektrischen Maschine 17 nicht erhöht. Sofern das Soll-Antriebsmoment M_{A,soll} das maximale Antriebsmoment M_{A, max} der Brennkraftmaschine 3 bei der aktuellen Drehzahl der Brennkraftmaschine 3 nicht überschreitet, wird der Bremsleistungs-Ausgangswert P_{B}, Ausgang um den definierten Leistungswert P_{def.} mittels der Regel- und/oder Steuereinrichtung 31 erhöht, indem lediglich das Antriebsmoment der Brennkraftmaschine 3 um den definierten Momentwert M_{def.} erhöht wird. Die Drehzahl der Brennkraftmaschine 3 bleibt dabei unverändert. Der Antriebsleistungs-Ausgangswert P_{A}, Ausgang der Brennkraftmaschine 3 wird dann ebenfalls um den definierten Leistungswert P_{def.} erhöht.

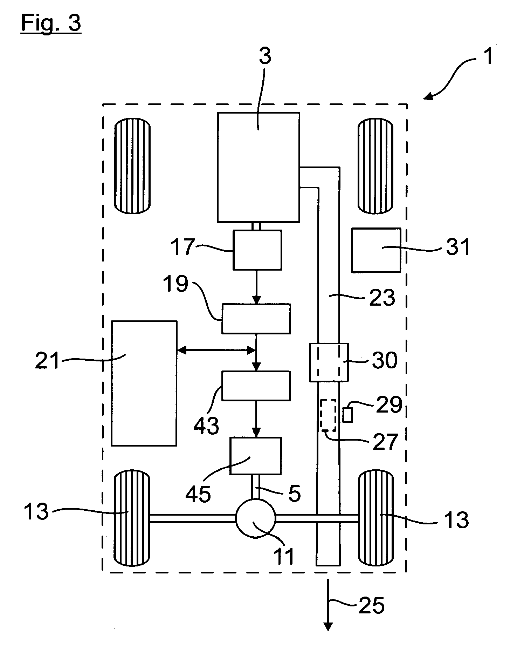

In Fig. 3 ist eine zweite Ausführungsform des erfindungsgemäßen Fahrzeugs 1 gezeigt. Im Gegensatz zu der ersten Ausführungsform des Fahrzeugs 1 weist das Fahrzeug 1 hier keinen parallelen, sondern einen seriellen Hybridantrieb auf. Die Brennkraftmaschine 3 und die elektrische Maschine 17 sind hier unmittelbar leistungsübertragend bzw. energieübertragend miteinander gekoppelt. Die Brennkraftmaschine 3 kann hier nicht mit der Antriebswelle 5 des Fahrzeugs 1 gekoppelt werden. Zudem befindet sich die elektrische Maschine 17 hier üblicherweise im Generatorbetrieb. Im Motorbetrieb wird die elektrische Maschine 17 hier beispielhaft nur betrieben, um die Brennkraftmaschine 3 zu starten. Des Weiteren ist die Energieumwandlungseinrichtung 19 hier nicht nur mit dem Energiespeicher 21, sondern auch mit einer Energieumwandlungseinrichtung 43 energieübertragend verbunden. Mittels der Energieumwandlungseinrichtung 43 wird die mittels der Energieumwandlungseinrichtung 19 in Gleichstrom umgewandelte elektrische Energie wieder in Drehstrom umgewandelt. Weiter ist die Energieumwandlungseinrichtung 43 hier auch leistungsübertragend bzw. energieübertragend mit dem Energiespeicher 21 verbunden. Auf diese Weise kann die in Form von Gleichstrom in dem Energiespeicher 21 gespeicherte elektrische Energie der Energieumwandlungseinrichtung 43 zugeführt werden.

Wie in Fig. 3 weiter gezeigt ist, weist die zweite Ausführungsform des Fahrzeugs auch eine leistungsübertragend bzw. energieübertragend mit der Energieumwandlungseinrichtung 43 verbundene elektrische Maschine 45 auf. Die elektrische Maschine 45 befindet sich hier stets im Motorbetrieb und treibt die Antriebswelle 5 des Fahrzeugs mit der mittels der Energieumwandlungseinrichtung 43 in Drehstrom umgewandelten elektrischen Energie an. Des Weiteren ist die elektrische Maschine 45 hier beispielhaft ebenfalls durch eine Drehstrom-Synchronmaschine gebildet.

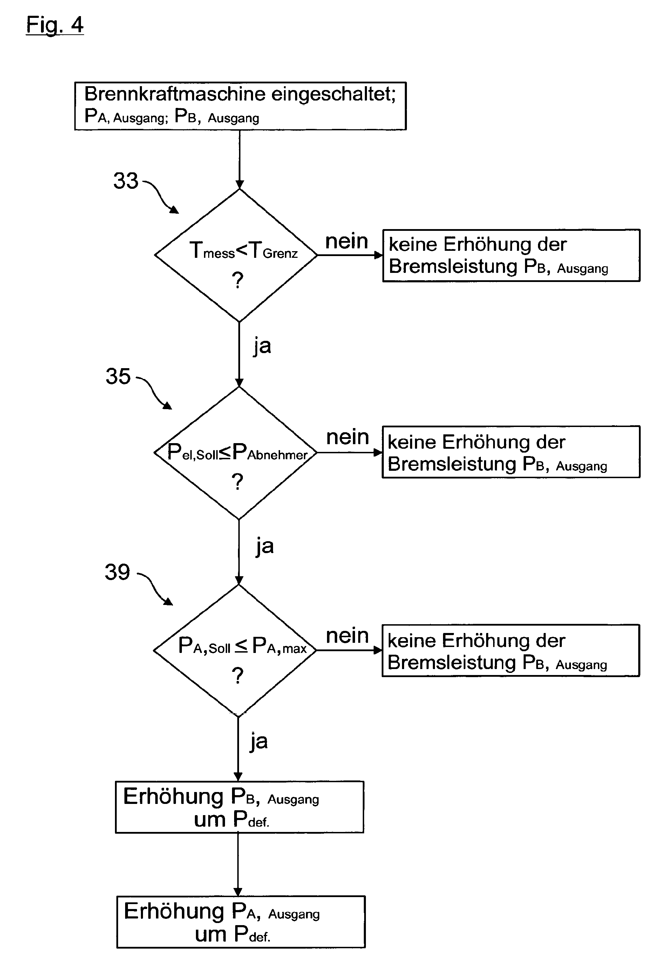

In Fig. 4 ist eine beispielhafte konkrete Regelung bzw. Steuerung der Brennkraftmaschine 3 und der elektrischen Maschine 17 mittels der Regel- und/oder Steuereinrichtung 31 bei der zweiten Ausführungsform des Fahrzeugs 1 gezeigt. Im Vergleich zu der Regelung und/oder Steuerung der ersten Ausführungsform des Fahrzeugs 1 folgt hier auf den Überprüfungsschritt 35 unmittelbar der Überprüfungsschritt 39. Die Überprüfungsschritte 37 und 41 werden hier nicht durchgeführt.

### Bezugszeichenliste

- 1: Fahrzeug
- 3: Brennkraftmaschine
- 5: Antriebswelle
- 7: Fahrzeuggetriebe
- 9: Fahrzeugkupplung
- 11: Differenzial
- 13: Fahrzeugrad
- 15: Verbindungswelle
- 17: elektrische Maschine
- 19: Energieumwandlungseinrichtung
- 21: Energiespeicher
- 23: Abgasstrang
- 25: Abgas
- 27: Abgasnachbehandlungselement
- 29: Temperatursensor
- 30: Heizeinrichtung
- 31: Regel- und Steuereinrichtung
- 33: Überprüfungsschritt
- 35: Überprüfungsschritt
- 37: Überprüfungsschritt
- 39: Überprüfungsschritt
- 41: Überprüfungsschritt
- 43: Energieumwandlungseinrichtung
- 45: elektrische Maschine
- P_{A, Ausgang}: Antriebsleistung
- P_{B, Ausgang}: Bremsleistung
- P_{Abnehmer}: Abnehmerleistung
- P_{elektrisch, soll}: elektrische Sollleistung
- P_{A, soll}: Soll-Antriebsleistung
- P_{A, max}: maximale Antriebsleistung
- P_{def.}: definierte Leistungswert
- Tₘₑₛₛ: gemessene Temperatur
- T_{grenz}: Temperatur-Grenzwert
- M_{A,soll}: Soll-Antriebsmoment
- M_{A,max}: maximale Antriebsmoment
- M_{def.}: definierte Momentwert

## Patentansprüche

1. Verfahren zum Betreiben eines Fahrzeugs, insbesondere eines Nutzfahrzeugs, wobei das Fahrzeug eine Brennkraftmaschine (3) und einen mit der Brennkraftmaschine (3) gekoppelten Abgasstrang (23) aufweist, wobei eine Temperatur-Erfassungseinrichtung (29) vorgesehen ist, mittels der die Temperatur des Abgasstrangs (23) und/oder des durch den Abgasstrang (23) strömenden Abgases (25) erfassbar ist, wobei wenigstens eine mittels der Brennkraftmaschine (3) antreibbare elektrische Maschine (17) vorgesehen ist, mittels der elektrische Energie erzeugbar ist, und wobei die angetriebene elektrische Maschine (17) die Brennkraftmaschine (3) mit einer Bremsleistung beaufschlagt, **dadurch gekennzeichnet,**
**dass** eine Regel- und/oder Steuereinrichtung (31) vorgesehen ist, mittels der, insbesondere zur Erhöhung der Temperatur des Abgasstrangs (23), die elektrischen Maschine (17) und die Brennkraftmaschine (3) bei wenigstens einer definierten Betriebssituation des Fahrzeugs (1) selbsttätig geregelt und/oder gesteuert werden, dergestalt,
**dass**, sofern die wenigstens eine erfasste Temperatur wenigstens einen definierten Temperatur-Grenzwert (T_{grenz}) unterschreitet, die Bremsleistung der elektrischen Maschine um einen definierten Leistungswert (P_{def}.) erhöht wird, und
**dass** bei einer Erhöhung der Bremsleistung um den definierten Leistungswert (P_{def}.) die Antriebsleistung der Brennkraftmaschine (3) ebenfalls um den definierten Leistungswert (P_{def}.) erhöht wird.

2. Verfahren nach Anspruch 1, **dadurch gekennzeichnet, dass** die Brennkraftmaschine (3) mit wenigstens einer Antriebswelle (5) des Fahrzeugs (1) koppelbar ist, wobei in einer Koppel-Betriebssituation des Fahrzeugs (1), in der die Brennkraftmaschine (3) mit der Antriebswelle (5) gekoppelt und eingeschaltet ist, die Antriebsleistung der Brennkraftmaschine (3) derart erhöht wird, dass durch die Erhöhung der Antriebsleistung die Fahrzeuggeschwindigkeit nicht verändert wird.

3. Verfahren nach Anspruch 2, **dadurch gekennzeichnet, dass** in der Koppel-Betriebssituation zur Erhöhung der Antriebsleistung der Brennkraftmaschine (3) nur das Antriebsdrehmoment der Brennkraftmaschine (3) verändert wird.

4. Verfahren nach einem der vorhergehenden Ansprüche, **dadurch gekennzeichnet, dass** die Brennkraftmaschine (3) von der wenigstens einen Antriebswelle (5) des Fahrzeugs (3) abkoppelbar ist, wobei in einer Abkoppel-Betriebssituation des Fahrzeugs (1), in der die Brennkraftmaschine (3) von der Antriebswelle (5) abgekoppelt und eingeschaltet ist, zur Erhöhung der Antriebsleistung der Brennkraftmaschine (3) das Antriebsdrehmoment der Brennkraftmaschine (3) und/oder die Drehzahl der Brennkraftmaschine (3) verändert wird.

5. Verfahren nach einem der vorhergehenden Ansprüche, **dadurch gekennzeichnet, dass** die Brennkraftmaschine (3) von der wenigstens einen Antriebswelle (5) des Fahrzeugs (1) abkoppelbar ist, wobei das Fahrzeug (1) ein Start-Stopp-System aufweist, und wobei in einer Stopp-Betriebssituation des Fahrzeugs (1), in der die Brennkraftmaschine (3) von der Antriebswelle (5) abgekoppelt und mittels des Start-Stopp-Systems ausgeschaltet ist, die Brennkraftmaschine (3) selbsttätig mittels der Regel- und/oder Steuereinrichtung (31) eingeschaltet wird, wenn die wenigstens eine erfasste Temperatur den wenigstens einen Temperatur-Grenzwert (T_{grenz}) unterschreitet.

6. Verfahren nach einem der vorhergehenden Ansprüche, **dadurch gekennzeichnet, dass** die Brennkraftmaschine (3) mit der wenigstens einen Antriebswelle (5) des Fahrzeugs (1) koppelbar ist, wobei zwischen der Brennkraftmaschine (3) und der wenigstens einen Antriebswelle (5) ein Fahrzeuggetriebe (7) geschaltet ist, wobei zwischen der Brennkraftmaschine (3) und dem Fahrzeuggetriebe (7) eine Fahrzeugkupplung (9) geschaltet ist, wobei das Fahrzeuggetriebe (7) mittels einer Verbindungswelle (15) mit der Fahrzeugkupplung (9) verbunden ist, und wobei die elektrischen Maschine (17) leistungsübertragend mit der Verbindungswelle (15) verbunden ist.

7. Verfahren nach Anspruch 1, **dadurch gekennzeichnet, dass** die Brennkraftmaschine (3) mit keiner Antriebswelle (5) des Fahrzeugs (1) koppelbar ist, wobei in einer Betriebssituation des Fahrzeugs (1), in der die Brennkraftmaschine (3) eingeschaltet ist, zur Erhöhung der Antriebsleistung der Brennkraftmaschine (3) das Antriebsdrehmoment der Brennkraftmaschine (3) und/oder die Drehzahl der Brennkraftmaschine (3) verändert wird.

8. Verfahren nach Anspruch 1 oder 7, **dadurch gekennzeichnet, dass** die Brennkraftmaschine (3) mit keiner Antriebswelle (5) des Fahrzeugs (1) koppelbar ist, wobei die mittels der elektrischen Maschine (17) erzeugte elektrische Energie mittels einer Zuführeinrichtung einer weiteren elektrischen Maschine (45) zuführbar ist, mittels der wenigstens eine Antriebswelle (5) des Fahrzeugs (1) antreibbar ist, wobei bevorzugt vorgesehen ist, dass die mittels der elektrischen Maschine (17) erzeugte elektrische Energie in einem elektrischen Energiespeicher (21) zwischenspeicherbar und ausgehend von dem Energiespeicher (21) der weiteren elektrischen Maschine (45) zuführbar ist.

9. Verfahren nach einem der vorhergehenden Ansprüche, **dadurch gekennzeichnet, dass** zur Erhöhung der Bremsleistung der elektrischen Maschine (17) die mittels der elektrischen Maschine (17) erzeugte elektrische Leistung erhöht wird.

10. Verfahren nach Anspruch 9, **dadurch gekennzeichnet, dass** die elektrische Leistung der elektrischen Maschine (17) wenigstens einem elektrischen Energieabnehmer (21, 30) zuführbar ist, wobei zur Erhöhung der mittels der elektrischen Maschine (17) erzeugten elektrischen Leistung die dem elektrischen Energieabnehmer (21, 30) zugeführte elektrische Leistung erhöht wird, wobei bevorzugt vorgesehen ist, dass der wenigstens eine elektrische Energieabnehmer (21, 30) durch einen elektrischen Energiespeicher und/oder durch einen elektrischen Energieverbraucher gebildet ist.

11. Verfahren nach Anspruch 9, **dadurch gekennzeichnet, dass** der elektrische Energieverbraucher durch eine elektrisch betreibbare Heizeinrichtung gebildet ist, mittels der der Abgasstrang aufheizbar ist.

12. Verfahren nach einem der vorhergehenden Ansprüche, **dadurch gekennzeichnet, dass**, sofern die erfasste Temperatur den definierten Temperatur-Grenzwert (T_{grenz}) unterschreitet, vor der Erhöhung der Bremsleistung mittels der Regel- und/oder Steuereinrichtung (31) überprüft wird, ob die Bremsleistung der elektrischen Maschine (17) um den definierten Leistungswert (P_{def}.) erhöht werden kann, und/oder dass, sofern die erfasste Temperatur den definierten Temperatur-Grenzwert (T_{grenz}) unterschreitet, vor der Erhöhung der Bremsleistung mittels der Regel- und/oder Steuereinrichtung (31) überprüft wird, ob die Antriebsleistung der Brennkraftmaschine (3) um den definierten Leistungswert (P_{def.}) erhöht werden kann.

13. Verfahren nach einem der vorhergehenden Ansprüche, **dadurch gekennzeichnet, dass** der Abgasstrang (23) wenigstens ein Abgasnachbehandlungselement (27) aufweist, wobei bevorzugt vorgesehen ist, dass das wenigstens eine Abgasnachbehandlungselement (27) durch einen Partikelfilter und/oder durch einen Oxidationskatalysator und/oder durch einen SCR-Katalysator und/oder durch einen DeNOₓ-Katalysator gebildet ist.

14. Verfahren nach Anspruch 13, **dadurch gekennzeichnet, dass** mittels der Temperatur-Erfassungseinrichtung (29) die Temperatur des Abgasstrangs (23) und/oder des durch den Abgasstrang (23) strömenden Abgases (25) in einem definierten Nahbereich im Bereich wenigstens eines Abgasnachbehandlungselements (27) erfassbar ist.

15. Fahrzeug, insbesondere Nutzfahrzeug und/oder zur Durchführung eines Verfahrens nach einem der vorhergehenden Ansprüche, wobei das Fahrzeug (1) eine Brennkraftmaschine (3) und einen mit der Brennkraftmaschine (3) gekoppelten Abgasstrang (23) aufweist, wobei eine Temperatur-Erfassungseinrichtung (29) vorgesehen ist, mittels der die Temperatur des Abgasstrangs (23) und/oder des durch den Abgasstrang (23) strömenden Abgases (25) erfassbar ist, wobei wenigstens eine mittels der Brennkraftmaschine (3) antreibbare elektrische Maschine (17) vorgesehen ist, mittels der elektrische Energie erzeugbar ist, und wobei die angetriebene elektrische Maschine (17) die Brennkraftmaschine (3) mit einer Bremsleistung beaufschlagt, **dadurch gekennzeichnet,**
**dass** eine Regel- und/oder Steuereinrichtung (31) vorgesehen ist, mittels der, insbesondere zur Erhöhung der Temperatur des Abgasstrangs (31), die elektrischen Maschine (17) und die Brennkraftmaschine (3) bei wenigstens einer definierten Betriebssituation des Fahrzeugs (1) selbsttätig regelbar und/oder steuerbar sind, dergestalt,
**dass**, sofern die wenigstens eine erfasste Temperatur wenigstens einen definierten Temperatur-Grenzwert (T_{grenz}) unterschreitet, die Bremsleistung der elektrischen Maschine um einen definierten Leistungswert (P_{def.}) erhöht wird, und
**dass** bei einer Erhöhung der Bremsleistung um den definierten Leistungswert (P_{def.}) die Antriebsleistung der Brennkraftmaschine (3) ebenfalls um den definierten Leistungswert (P_{def.}) erhöht wird.
